# EUROPEAN PATENT APPLICATION

(11) **EP 1 085 131 A2**
(43) Date of publication of application: **21.03.2001**
(21) Application number: 00500187.0
(22) Date of filing: 14.08.2000
(51) Int. Cl.: E03B 3/03

(54) **Rainwater recovery device**

(30) Priority: 15.09.1999 ES 9902354 U
(71) Applicant: Igemar, S.L., 17820 Banyoles (ES)
(72) Inventor: Pages Pages, Josep, 17820 Banyoles (ES)
(74) Representative: SUGRANES - VERDONCES - FERREGÜELA

(57) **Abstract**

Rainwater recovery device.

Is particularly applicable to recover rainwater (17) collected from a building down-pipe (4), and it comprises a collector-filter (1); a main reservoir (2) for the filtered water (19); a pipe (23) communicating the collector-filter (1) with the main reservoir (2); an outlet mouth (22) for the water (19) collected in the main reservoir (2); and an external casing (3), adapted to rest on the floor (6; 20) and being attached to the wall (5) of the down-pipe (4), and enclosing the said collector-filter (1), main reservoir (2) and pipe (23). It comprises at least an external reservoir (26), linked to the main reservoir (2) by the communicating pipes system.

## Description

### Technical Sector of the Invention.-

The object of the invention is a rainwater recovery device, particularly applicable to rainwater collected from a building down-pipe for its later use, for example, in gardening and agricultural irrigation.

### Background of the Invention.-

Many embodiments of installations devised for the collection of rainwater are known, which are intended for the later use of the water in the irrigation of gardens and cultivation, or for any other purpose admitting the use of this kind of water. In general, such installations comprise a rainwater collecting means which, via one or several pipes, store water in reservoirs for its later utilization. Although it is common practice to drive the rainwater collected in roof gutters to a water drain or sewer, through downpipes connected to said roof gutters, it is known from time immemorial to provide installations for the collection of rainwater from down-pipes, which is driven to storage reservoirs, wherefrom it was taken out, in the past times manually and nowadays by means of electrically or mechanically operated pumps.

Up to the present, the inventor does not know of any device deliberately intended for the rainwater recovery and which provide for an easy and convenient integration in gardening scenes, such as is the case of backyards in houses, hostels, hotels, etc., as well as for a simple functional adaptation to said scenes.

### Disclosure of the invention.-

The rainwater recovery device, particularly for the rainwater collected from a building down-pipe, which is the object of the invention, is characterized in that it comprises a rainwater collector-filter, arranged transversely in the down-pipe; a main reservoir for the collection of the filtered rainwater, arranged under the collector-filter; a pipe communicating the collector-filter with the main reservoir; an outlet mouth for the water collected in the main reservoir; and an external casing, adapted to rest on the floor and being attached to the wall of the down-pipe, and enclosing the said collector-filter, main reservoir and pipe.

According to another feature of the device which is the object of the invention, the device comprises at least an external reservoir, linked to the main reservoir by the communicating pipes system.

### Brief Description of the Drawings.-

In the attached drawings there is illustrated, by way of a non-limiting example, a form of embodiment of the rainwater recovery device which is the object of the invention. In the said drawings:
Fig. 1 is a front sectional view of the device according to the invention;
Fig. 2 is a side sectional view of the device object of the invention; and
Fig. 3 is a sectional view, in enlarged scale, of the collector-filter of the device according to the invention.

### Detailed description of the drawings.-

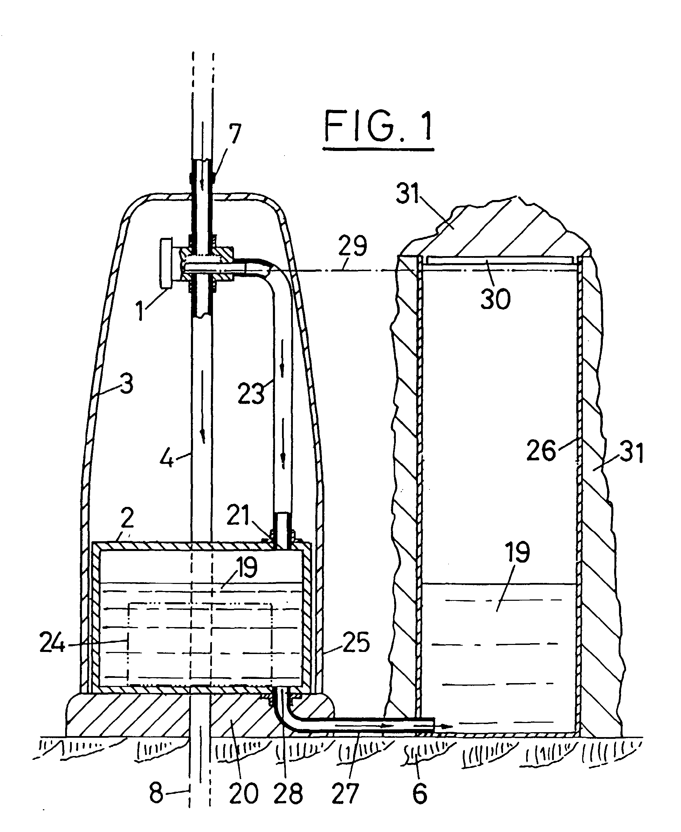

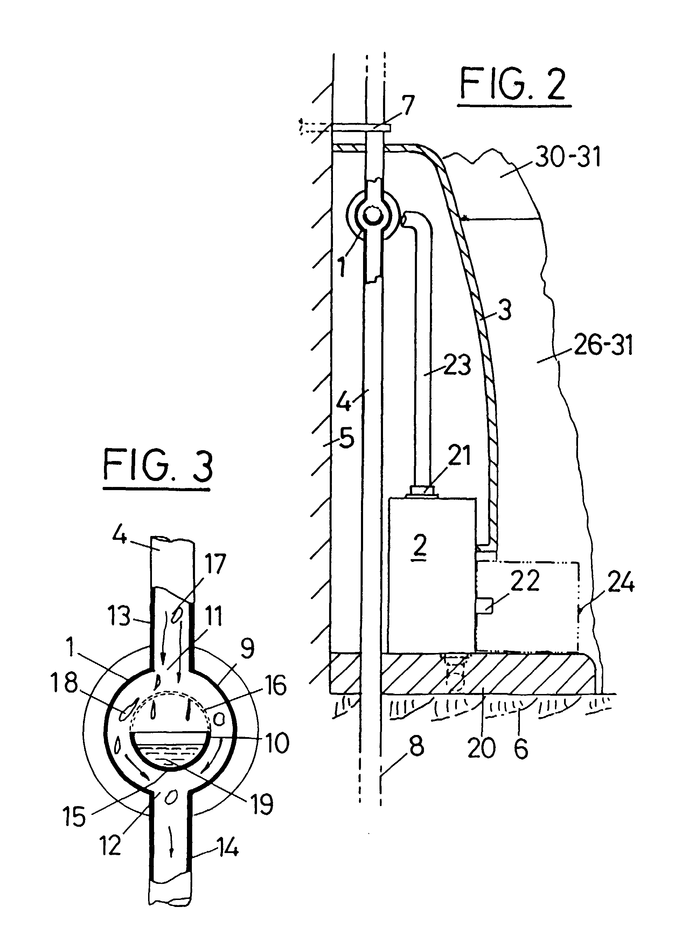

The rainwater recovery device of the present invention that is described as an embodiment thereof, is shown in front and side views in Figs. 1 and 2, where one can see that the rainwater recovery device comprises a collector-filter 1, a main reservoir 2 for the collection of rainwater, and an external casing 3.

Collector-filter 1 is transversely arranged in a down-pipe 4 that is parallel to a wall 5 of a building and perpendicularly to floor 6, the down-pipe 4 being secured to the wall 5 by means of flanges 7. In this example of embodiment, down-pipe 4 follows a path that runs behind the main reservoir 2, in such a manner that its lower end 8, which is represented in dotted lines, leads into a sewer channel, not represented.

In Fig. 3 it can de seen that collector-filter 1 comprises an external tubular body 9 and an internal tubular body 10, concentric one another. External tubular body 9 comprises an inlet port 11 and an outlet port 12, diametrically arranged one another and adapted to receive corresponding intermediate inlet 13 and outlet 14 ends, respectively, of the down-pipe 4. Internal tubular body 10 comprises a channel portion 15, whose bottom is facing the inlet port 11, and a filter 16 provided between the said channel portion 15 and the inlet port 11. All of this is adapted in such a manner that, rainwater 17 that flows through down-pipe 4 and carries solids such as for instance tree leaves 18, upon reaching the filter arrangement 16 of the collector-filter 1, the filtering of a part 19 of rainwater 17 is done, this latter becoming free from said solids 18 and being collected in the channel portion 15, whereas the said solids 18 are carried by the remaining no-filtered rainwater 17, which flows through the down-pipe 4 to the outlet port 12 of the collector-filter 1 and therefrom to the sewer duct.

Main reservoir 2, as it can be seen from Figs. 1 and 2, has a general parallelepiped shape and in this example of embodiment is placed on a civil work base 20. Main reservoir 2 has an inlet mouth 21 arranged in its upper part and an outlet mouth 22 frontally arranged in the lower part. The inlet mouth 21 of main reservoir 2 is connected to the channel portion 15 of collector-filter 1 via a pipe 23, whereas the outlet mouth 22 of main reservoir 2 is adapted to receive the coupling of an electropump 24, diagrammatically represented in dotted lines, for impelling the filtered rainwater 19 to the points where its reuse is to intended be done.

The external casing 3 encloses the collector-filter 1, the main reservoir 2 and the pipe 23 linking them, the casing 3 being attached to the wall 5 which on its lower end 25 rests on the civil work 20.

In this example of embodiment of the device according to the invention, an external reservoir 26 is provided which has a removable cover 30 and which is hydraulically connected, by communicating ducts via a pipe 27 to the main reservoir 2 that, to this purpose, is provided in its lower part with a discharge mouth 28. Thus, the device allows to store a larger amount of filtered rainwater 19 and therefore to achieve a larger degree of rainwater 17 recovery. Indeed, the external reservoir 26 allows for the storage of filtered rainwater 19 from the main reservoir 1 through the communicating ducts system, in such a way that, as shown in Fig. 1 by means of a dotted line 29, full level of the external reservoir 26 corresponds to the height of pipe 23 which links collector-filter 1 with main reservoir 2. It is evident from the aforesaid that the number of external reservoirs 26 of the device according to the invention will be determined precisely as a function of the filtered rainwater 19 volume which is deemed to be necessary, then being simply required the hydraulic communication between external reservoirs 26 and main reservoir 2 by means of appropriate mouths 28.

The external reservoir 26 which is illustrated in Figs. 1 and 2, as well as its removable cover 30, have an external covering 31 intended to integrate them in the environment where they are installed. Thus, for instance, they cam simulate a rock.

## Claims

1. Rainwater recovery device, particularly applicable to rainwater (17) collected from a building down-pipe (4), characterized in that it comprises a collector-filter (1) for the rainwater (17), arranged transversely in the down-pipe (4); a main reservoir (2) for the collection of the filtered rainwater (19), arranged under the collector-filter (1); a pipe (23) communicating the collector-filter (1) with the main reservoir (2); an outlet mouth (22) for the water (19) collected in the main reservoir (2); and an external casing (3), adapted to rest on the floor (6; 20) and being attached to the wall (5) of the down-pipe (4), and enclosing the said collector-filter (1), main reservoir (2) and pipe (23).

2. Device according to claim 1, characterized in that it comprises at least an external reservoir (26), linked to the main reservoir (2) by the communicating pipes system.
